# EUROPEAN PATENT APPLICATION

(11) **EP 2 998 688 A1**
(43) Date of publication of application: **23.03.2016**
(21) Application number: 14798237.5
(22) Date of filing: 10.04.2014
(51) Int. Cl.: F41H 1/04, F41H 1/08, B32B 3/04, B32B 27/06

(54) **FRAGMENT- AND BULLET-PROOF HELMET**

(30) Priority: 13.05.2013 ES 201330579 U
(71) Applicant: Fedur, S.A., 50410 Zaragoza (ES)
(72) Inventor: FERRER GIL, Rafael, E-50410 Cuarte de Huerva (Zaragoza) (ES)
(74) Representative: Isern-Jara, Nuria
(86) International application number: PCT/ES2014/070293
(87) International publication number: WO 2014/184407

(57) **Abstract**

The invention concerns a fragment- and bullet-proof helmet comprising a shell consisting of at least two resin-containing layers, wherein the resin-containing layers are connected to each other by the edges of the shell over its entire contour, such that the resin-free layer is encapsulated hermetically between the resin containing layers, forming a plurality of layers which improves rigidity and ballistic resistance.

## Description

### OBJECT OF THE INVENTION

The object of the present application for an invention is to register a fragment- and bullet-proof helmet which incorporates notable innovations.

More specifically, the invention proposes the development of a helmet which is fragment-proof especially due to the design thereof and bullet-proof due to the materials thereof, formed by a plurality of layers which improve the rigidity and the ballistic resistance compared the known helmets.

### BACKGROUND OF THE INVENTION

Helmets in the military field for the protection of the user against impacts of various natures are widely known. In recent years, helmets have been emerging with layers distinguished by blocks such as that disclosed in the application ES282140 which allow the resistance and lightness to be increased compared to the models with sheets compacted into one single block. These multi-block or multi-layer helmets have a plurality of layers with compacted sheets, the layers been selectable from various materials depending on the function which the layers are going to fulfill. In fact, the selection of the type of suitable material to use as well as the thicknesses and number of layers to include depends on the nature of the projectile against which it is desired to protect the user of the helmet, the probable energy of the projectile at the moment of impact with the helmet and the resistance which is desired to be obtained for efficient protection of the helmet.

However, these helmets having multiple layers or blocks have a series of drawbacks due to the nature thereof. Layers made of a material with properties different to the intermediate layers are usually situated in the exterior faces of the helmet. This causes a weakening in the area of the edge of the helmet, since the different layers tend to slide relative to each other. Although in ballistic resistance tests, acceptable results for perforation are achieved, the impact of projectiles produces significant delamination on the multi-layer structure of the helmet and significant trauma to the user.

### DESCRIPTION OF THE INVENTION

The present invention has been developed with the aim of providing an especially fragment- and bullet-proof helmet which resolves the previously mentioned drawbacks, also providing other additional advantages which will be evident from the description which is included below.

A fragment- and bullet-proof helmet is therefore an object of the present invention which comprises a shell formed by at least one resin-free layer enclosed between at least two resin-containing layers, said resin-containing layers being joined to each other by the edges of the shell over its entire contour such that said resin-free layer is hermetically encapsulated between the resin-containing layers.

In the present description and claims, it should be understood that a layer or a block can be formed in turn by different sheets.

Owing to these characteristics, a fragment- and bullet-proof helmet is achieved, having a multi-layer structure with a resin-free layer completely hermetically encapsulated. A more rigid helmet than the helmets of the prior art is obtained, avoiding the sliding of the different layers made of various materials. The helmet, object of the invention, has greater ballistic resistance to fragments and less trauma for the user; this is due to the fact that the energy of the impacts on the helmet is absorbed and arrives with less intensity to the head of the user in comparison to the known helmets.

In one embodiment of the present invention, at least one of the resin-containing layers can have a curved end oriented towards another resin-containing layer, joining both with high resistance due to the action of the resin; or said resin-containing layers can have a transversal section convergent with each other with the same results as in the previous case.

Advantageously, said resin can be of the phenolic, epoxy, polyester, polyurethane, thermoplastic or vinyl ester type.

Other characteristics and advantages of the fragment- and bullet-proof helmet, object of the present invention, will be evident from the description of a preferred, but non-exclusive embodiment, which is illustrated in an exemplary and non-limiting manner in the drawings below, in which:

### BRIEF DESCRIPTION OF THE DRAWINGS

Figure 1 is a schematic view and transversal section of a first embodiment of the helmet object of the present invention;
Figure 2 is a schematic view and transversal section of a second embodiment of the helmet object of the present invention; and
Figure 3 is a schematic view and transversal section of a shell of a multi-layer helmet of the prior art.

### DESCRIPTION OF A PREFERRED EMBODIMENT

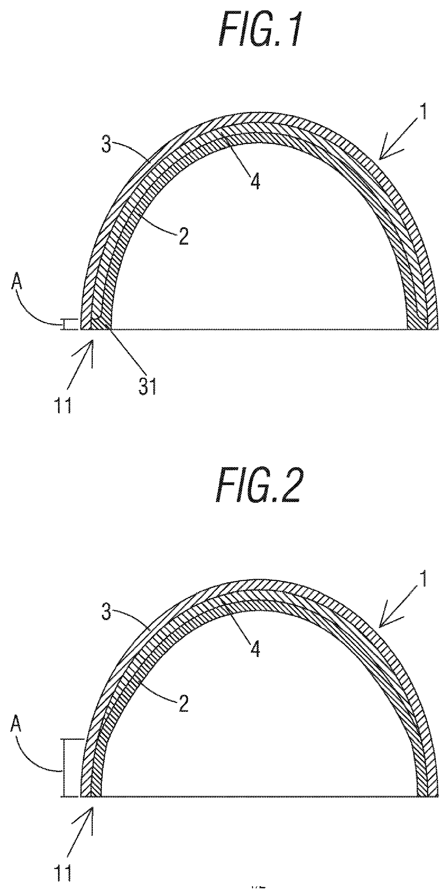

As is shown in the figures 1 and 2, preferred embodiments of a fragment-and bullet-proof helmet according to the invention are illustrated.

In both figures, it can be observed that the fragment- and bullet-proof helmet comprises a shell 1 preferably formed by a resin-free layer 4 enclosed between two resin-containing layers 2, 3. However, it will be obvious to the person skilled in the art to vary the number of said layers as a function of the particular requirements of each case.

Said resin-containing layers 2, 3 are joined to each other over the entire perimeter of the shell 1 by the edges 11 of the shell 1 such that said resin-free layer 4 is encapsulated between the resin-containing layers 2, 3.

Preferably the resin-containing layer 2 situated on the interior side of the shell 1 has a curved end 31, in the manner of a flange, oriented towards the other resin-containing layer 3 situated on the exterior side of the shell 1. It should be understood that it will be obvious to provide the resin-containing layer 3 situated on the exterior side with a curved end oriented towards the resin-containing layer 2 situated on the interior side of the shell 1. The curve can be selected as a function of the particular requirements.

Alternatively, the curve can be implemented in both resin-containing layers 2, 3, one on top of the other at the same time (not shown).

Alternatively, it will be possible to provide both resin-containing layers 2, 3 with a transversal section converging with each other such that both resin-containing layers 2, 3 are joined on the edge 11 of the shell 1.

The resin, with which said resin-containing layers 2 and 3 are made, can preferably be selected, for example from phenolic, epoxy, polyester, polyurethane, thermoplastics, vinyl ester resins, etc.

In figures 1 and 2, the overlapping distance A between the two resin-containing layers 2, 3 is depicted, which can preferably be between 5 and 20 mm, although it will be evident to modify this range depending on the circumstances.

Additionally, the present fragment- and bullet-proof helmet has a trimming or internal support (not shown) adaptable to the contour of the head of the user, having a larger or smaller width and said trimming being made of synthetic foam or of any type which is suitable.

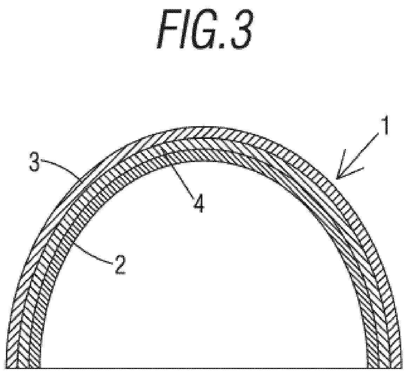

Owing to the present invention, a fragment- and bullet-proof helmet having more rigid edges 11 than the helmets of the prior art is achieved, like that depicted in figure 3. In the previously existing helmets, the edges had a certain flexibility due to relative slipping between the layers of different material. Due to this increase in the rigidity of the edge 11 and to the hermetic encapsulation of the resin-free layer 4, the results are improved, for example in the V50 ballistic test against fragments and less trauma to the user is achieved. The delamination between layers is reduced compared to the prior art and the impact energy on the helmet caused, for example by violent blows from rocks, falls, etc. is dissipated in an optimal manner. By way of example, with a fragment- and bullet-proof helmet like the present one, a deceleration of less than 400 G can be achieved with a previous acceleration of 7 m/s².

All of which guaranteeing a very significant weight reduction in comparison to the helmets made of one single block and those of multiple blocks of the prior art, with greater resistance to impacts and with better results in ballistics test at any temperature. Thus a fragment- and bullet-proof helmet is achieved, designed for military use and especially for the so-called, "special forces", such as for example paratroopers.

The details, the forms, the dimensions and other accessory elements, as well as the materials used in the manufacture of the fragment- and bullet-proof helmet of the invention can be conveniently substituted for others which are technically equivalent and which do not depart from the essence of the invention or from the scope defined by the claims which are included below.

## Claims

1. A fragment- and bullet-proof helmet which comprises a shell formed by at least one resin-free layer enclosed between at least two resin-containing layers, **characterized by** the fact that said resin-containing layers are joined to each other by the edges of the shell over the entire contour thereof such that said resin-free layer is hermetically encapsulated between the resin-containing layers.

2. The fragment- and bullet-proof helmet according to claim 1, **characterized by** the fact that at least one resin-containing layer has a curved end oriented towards another resin-containing layer.

3. The fragment- and bullet-proof helmet according to claim 1, **characterized by** the fact that said resin-containing layers have a transversal section convergent with each other.

4. The fragment- and bullet-proof helmet according to claim 1, **characterized by** the fact that said resin is of the phenolic, epoxy, polyester, polyurethane, thermoplastics or vinyl ester type.
